# EUROPÄISCHE PATENTSCHRIFT

(11) **EP 0 587 081 B1**
(45) Veröffentlichungstag und Bekanntmachung des Hinweises auf die Patenterteilung: **27.11.1996**
(21) Anmeldenummer: 93114211.1
(22) Anmeldetag: 04.09.1993
(51) Int. Cl.: B65D 85/672, G11B 23/02

(54) **Spulenbehälter für Magnetbänder**
Reel container for magnetic tapes
Boîte pour les bobines de bandes magnétiques

(30) Priorität: 11.09.1992 DE 9212275 U
(43) Veröffentlichungstag der Anmeldung: 16.03.1994
(73) Patentinhaber: BASF Magnetics GmbH, 68165 Mannheim (DE)
(72) Erfinder: Thiele, Hartmut, D-8000 München 71 (DE)
(74) Vertreter: Karau, Wolfgang, Dr.

(56) Entgegenhaltungen:
- DE-A- 2 420 491
- DE-A- 3 205 478
- DE-A- 4 025 906
- US-A- 4 083 449

## Beschreibung

Der Gegenstand der Erfindung betrifft einen aus Kunststoff bestehenden durch Spritzgießen hergestellten einteiligen Behälter zur Aufnahme eines Magnetbanders, welches auf einen mit einer inneren Bohrung versehenen Wickelkern aufgewickelt ist, bestehend aus einer über eine Scharnierlinie klappbaren Boden- und Deckelwanne, wobei der Behälter mit einem Haltegriff versehen ist, welcher an einer der Scharnierlinie gegenüberliegenden abgeschrägten Kante diese überspannend ausgebildet ist und der Behälter einen Schließmechanismus zum Verriegeln des Boden- mit der Deckelwanne ausgestaltet ist.

Spulenbehälter der eingangs genannten gattungsmäßigen Art sind beispielsweise aus der EP 0 043 016 sowie der EP 0 217 254 bekannt. Diese Behälter erfüllen folgende Anforderungen:
- Die Magnetband-Wickel sind in ihnen gegen Staub geschützt
- der Schließmechanismus ist gegen Erschütterung gesichert
- der Behälter ist verhältnismäßig leicht und robust.

Derartige Transportbehälter werden normalerweise aus Polypropylen durch Blasformen in doppelwandiger Ausführung oder in mehrteiligem Spritzgußverfahren hergestellt. Dadurch haben sie trotz ihres relativ niedrigen Gewichts den Nachteil eines hohen Raumbedarfs, was beispielsweise in Rundfunkanstalten, in welchen derartige Behälter mit den in ihnen zu Archivierungszwecken aufbewahrten Magnetbändern in einer großen Anzahl lagern, zu einem erhöhten Raumbedarf führt. Außerdem müssen die einzelnen Funktionsbestandteile, beispielsweise die aus der EP 0 043 016 bekannten Verschlußelemente extra montiert werden.

Ein weiterer Nachteil besteht darin, daß die Spulen mit ihrer inneren kreisförmigen Bohrung auf einer Kernarretierung sitzen, so daß sie nicht drehbar gelagert sind. Entsteht nun auf die Magnetband-Spule durch Fall oder ähnliches eines äußere Krafteinwirkung, so kann durch das Trägheitsmoment der bewickelten Spule eine Faltenbildung im Bandwickel entstehen und damit das Magnetband unbrauchbar werden (sogenanntes Cinching).

Daher bestand die Aufgabe, einen Behälter der eingangs genannten Art zu finden, bei welchem das Magnetband vor äußeren Einflüssen, zum Beispiel Stoß, Fall, Staub, Feuchtigkeit und ähnliches zuverlässig geschützt ist, wobei der Behälter auf einfache und preisgünstige Weise herzustellen ist, und wobei das Lagervolumen des Behälters deutlich reduziert ist.

Diese Aufgabe wurde gelöst durch Bereitstellung eines Behälters mit den im Anspruch 1 genannten Merkmalen. Weitere Einzelheiten der Erfindung gehen aus den Unteransprüchen, der Beschreibung sowie den Zeichnungen hervor.

Nachstehend wird der Gegenstand der Erfindung anhand der Zeichnungen näher erläutert und zwar zeigt
- Figur 1: eine Draufsicht auf den Behälter
- Figur 2: einen entsprechenden Querschnitt entlang der Linie II

Der Behälter wird in einteiliger Form aus recyclebarem Kunststoff, vorzugsweise Polypropylen, durch Spritzgießen in einwandiger Form hergestellt. Dieser Kunststoff ist hoch schlagfest und äußerst widerstandsfähig gegen mechanische Beanspruchung, so daß die Vorteile des bisherigen doppelwandigen durch Blasformen hergestellten Behälters voll erhalten bleiben und gleichzeitig die angestrebte Volumenreduzierung erreicht wird. Beispielsweise beträgt die Volumenreduzierung bei Archivierung für einen Behälter für 1''-Spulenware, einem gängigen Format für professionelle Anwendungen im Audio- und Video-Bereich in Rundfunkanstalten, rund 23 %.

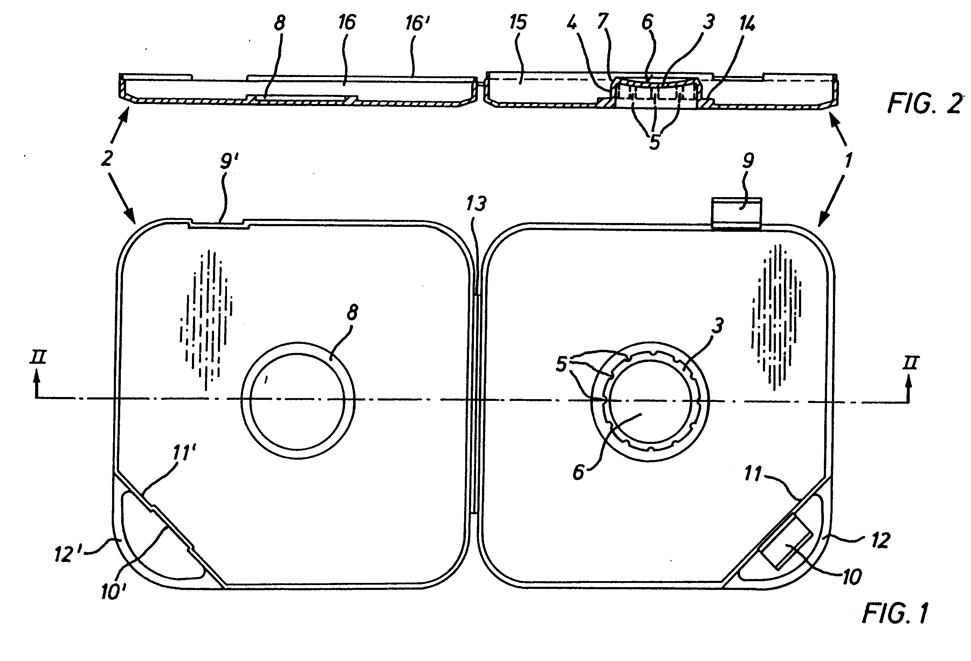

Der Behälter besteht aus einer Bodenwanne (1) und einer Deckelwanne (2), welche durch einen mit zwei Knicklinien versehenen Scharnierlappen (13) miteinander verbunden sind. Die Bodenwanne (1) enthält in der geometrischen Mitte ihrer Innenseite als Kern- beziehungsweise Spulenarretierung einen zylindrischen Vorsprung (3), dessen Oberseite (7) kegelstumpfartig abgeschrägt sein kann, um die Spule bequem aufstecken zu können. Dabei ist die Mantelfläche (4) des zylindrischen Vorsprungs über ihren Umfang gleichmäßig mit in axialer Richtung verlaufenden Kerben (5) versehen, außerdem ist die kreisförmige Deckfläche (6) konkav eingewölbt. Die letztere Maßnahme unterstützt die Versteifung der Oberseite der Spulenhalterung. Wie aus Figur 2 erkennbar ist, entspricht dem zylindrischen Vorsprung an der Innenseite der Bodenwanne eine entsprechende zylindrische Einkerbung an der Außenseite der Bodenwanne. Außerdem ist um den Vorsprung (3) herum ein kreisringförmiger Sockel (14) angebracht, auf welchem der Wickelkern beziehungsweise die Spule benachbart ihrer inneren Bohrung aufliegt. Die Deckelwanne (2) enthält ebenfalls an ihrer Innenseite in der geometrischen Mitte einen kreisringförmigen Vorsprung (8), dessen Höhe wesentlich geringer ist als die Höhe des Vorsprunges (3) an der Bodenwanne und wobei der Innendurchmesser des Kreisringes (8) größer ist als der Außendurchmesser des Vorsprungs (3) der Bodenwanne.

Die genannten Konstruktionsmerkmale bedingen, daß die Magnetbandspule nur mit einem kleinen Flächenanteil an dem Vorsprung (3), dem Sockel (14), dem Bodenteil beziehungsweise mit dem kreisringförmigen Vorsprung (8) lagestabil gehalten wird. Andererseits ist der Außendurchmesser des zylindrischen Vorsprungs (3) so bemessen, daß die Spule frei drehbar im Innenraum des Behälters gelagert ist, so daß bei einer äußeren Krafteinwirkung keine Beschädigung des Magnetbandes (cinching) eintreten kann.

Wie aus der Figur 1 erkennbar ist, enthalten sowohl Bodenals auch Deckelwanne an einer dem Verbindungslappen (13) gegenüberliegenden abgeschrägten Kante (11, 11') symmetrisch zueinander angeordnet, die Abschrägung übergreifend, Haltegriffe (12, 12'), die zueinander komplementär angeordnet sind, so daß sie beim Zusammenklappen des Behälters im geschlossenen Zustand sich zu einem Handgriff vereinigen. Dazu können die Griffteile (12, 12') an ihren zusammenzufügenden Innenseiten mit zueinander komplementären Vorsprüngen (Feder) und Nuten ausgestattet sein. Des weiteren kann der Handgriff in axialer Richtung der Spulenaufnahme asymmetrisch ausgestaltet sein, so daß, wie bei bekannten Behältern, mit einer Hand zwei Behälter mit den aneinandergrenzenden Handgriffen getragen werden können.

Des weiteren enthält das Boden- und/oder Deckelteil an mindestens einer Außenkante eine von den Seitenwänden in axialer Richtung ausgehende am Ende abgebogene Lasche (9), welche in eine entsprechend gestaltete Nut (9') am jeweils anderen Teil des Behälters durch Einschnappen eingreift. Zusätzlich kann in der dem Haltegriff gegenüberliegenden Abschrägung (11, 11') zusätzlich eine entsprechende Lasche und Nut (10, 10') zum Einschnappen vorgesehen sein.

Um den Behälter zuverlässig gegen das Eindringen von Staub oder Feuchtigkeit zu schützen, sind die Seitenwände (15) eines Behälterteils verglichen mit der benachbarten Seitenwand (16) des anderen Behälterteils etwas erhöht, so daß sie beim Zusammenklappen des Behälters in entsprechende Nuten (16') der anderen Behälter-Seitenwand (16) eintauchen.

Infolge der zwei geschilderten Verriegelungen im Außenbereich bleibt eine Innenseite des Behältes frei, so daß Beilagen beigepackt werden können. Außerdem können, um eine Langzeitlagerung unter konstanten Feuchtigkeitsbedingungen zu ermöglichen, die Spulen so in dünne Kunststoffbeutel, beispielsweise aus Polyethylen, locker gefaltet eingeschweißt werden, so daß sie beim Aufstecken der Spule auf die Kernaufnahme sowie beim Verschließen des Koffers nicht beschädigt werden.

Zusätzlich wurde durch die äußere Gestaltung des Behälters erstmals für den Benutzer die Möglichkeit geschaffen, auch größere Etikettenformate durch Umkleben der Kanten einzusetzen, was bedeutet, daß das Etikett beispielsweise von der Stirnfläche des Behälters bis auf die Seitenfläche ausgedehnt sein kann.

## Patentansprüche

1. Aus Kunststoff bestehender, durch Spritzgießen hergestellter einteiliger Behälter zur Aufnahme eines Magnetbandes, welches auf einen mit einer inneren Bohrung versehenen Wickelkern aufgewickelt ist, bestehend aus einer Bodenwanne (1) und einer Deckelwanne (2) mit einem sie über zwei Knicklinien verbindenden Scharnierlappen (13), ausgestattet mit einem Haltegriff (12), welcher an einer der Scharnierlinie gegenüberliegenden abgeschrägten Kante diese überspannend ausgebildet ist und der Behälter mit einem Schließmechanismus zum Verriegeln der Boden- mit der Deckelwanne ausgestattet ist, dadurch gekennzeichnet, daß
- die Bodenwanne (1) zentral auf ihrer Innenseite einen zylindrischen Ansatz (3) zum Aufstecken der Spule besitzt, wobei die Mantelfläche (4) des Ansatzes (3) über ihren Umfang verteilt in axialer Richtung verlaufende Kerben (5) aufweist und wobei die kreisförmige Deckfläche (6) des Ansatzes (3) konkav eingewölbt ist,
- die Deckelwanne (2) auf ihrer Innenseite zentral kreisringförmigen (8) Ansatz aufweist, dessen Innendurchmesser größer ist als der Außendurchmesser des Ansatzes (3) der Bodenwanne,
- an mindestens einer Außenkante der Boden- oder Deckelwanne eine in axialer Richtung der Spulenaufnahme verlaufende, am Ende abgebogene Lasche (9) zum Einschnappen in eine entsprechend ausgebildete Nut (9') am komplementären Teil des Behälters vorgesehen ist,
- eine weitere entsprechend ausgebildete Lasche (10) an der abgeschrägten Kante (11) innerhalb des Haltegriffs (12) zum Einschnappen in eine entsprechende Nut des komplementären Behälterteils angespritzt ist,
- an den abgeschrägten Kanten (11, 11') sowohl des Bodenals auch des Deckelteils zueinander komplementäre Haltegriffteile (12, 12') angebracht sind, welche beim Zusammenklappen des Behälters formschlüssig ineinandergreifen, und
- mindestens eine Seitenwand (15) des Boden- oder Deckelteils gegenüber der jeweils entsprechenden anderen Seitenwand (16) des komplementären Behältersteils eine größere Höhe aufweist, wobei der überhöhte Teil beim Zusammenklappen des Behälters in eine entsprechende Nut (16') des komplementären Behälterteils eintaucht.

2. Behälter nach Anspruch 1, dadurch gekennzeichnet, daß um den zylindrischen Vorsprung (3) an der Innenseite der Bodenwanne (1) ein ringförmiger Vorsprung (14) geringer Höhe angeordnet ist.

3. Behälter nach dem Anspruch 2, dadurch gekennzeichnet, daß der ringförmige Vorsprung (8) an der Innenseite der Deckelwanne eine geringere Höhe hat, als der zylindrische Vorsprung (3) an der Bodenwanne, und ungefähr gleich ist der Höhe des ringförmigen Vorsprungs (14) an der Bodenwanne.

4. Behälter nach dem Anspruch 1, dadurch gekennzeichnet, daß der zylindrische Vorsprung (3) an seiner Oberseite (7) kegelstumpfartig abgeschrägt ist.

5. Behälter nach dem Anspruch 3, dadurch gekennzeichnet, daß die Durchmesser sowie die Höhen der Kreisringe und Vorsprünge (3, 8, 14) so aufeinander abgestimmt sind, daß die mit Magnetband bewickelte Spule im Innenraum des Behälters frei drehbar gelagert ist.

## Claims

1. A one-part container made of plastic and produced by injection molding for receiving a magnetic tape which is wound up on a hub provided with an internal bore, comprising a base shell (1) and a cover shell (2) with a hinge strip (13) joining them via two bending lines, equipped with a handle (12), which is formed on, and reaches over, an angled off edge lying opposite the hinge line, and the container is equipped with a closing mechanism for locking the base shell to the cover shell, wherein
- the base shell (1) has centrally on its inner side a cylindrical attachment (3) for fitting on the reel, the outer cylindrical surface (4) of the attachment (3) having notches (5) distributed over its circumference and running in the axial direction, and the circular top surface (6) of the attachment (3) being curved in concavely,
- the cover shell (2) has centrally on its inner side a circular attachment (8), the inside diameter of which is greater than the outside diameter of the attachment (3) of the base shell,
- provided on at least one outer edge of the base shell or cover shell there is a lug (9), running in the axial direction of the reel mount and bent off at the end, for snapping into a correspondingly designed groove (9') on the complementary part of the container,
- a further correspondingly designed lug (10) is molded onto the angled off edge (11) inside the handle (12) for snapping into a corresponding groove of the complementary container part,
- provided on the angled off edges (11, 11') of the base part and of the cover part there are mutually complementary handle parts (12, 12'), which engage in each other with a form fit when the container is folded together, and
- at least one side wall (15) of the base part or cover part has a greater height than the respectively corresponding other side wall (16) of the complementary container part, the part protruding above entering into a corresponding groove (16') of the complementary container part when the container is folded together.

2. A container as claimed in claim 1, wherein an annular projection (14) of low height is arranged around the cylindrical projection (3) on the inner side of the base shell (1).

3. A container as claimed in claim 2, wherein the annular projection (8) has on the inner side of the cover shell a lower height than the cylindrical projection (3) on the base shell, and is approximately equal to the height of the annular projection (14) on the base shell.

4. A container as claimed in claim 1, wherein the cylindrical projection (3) is frustoconically angled off on its upper side (7).

5. A container as claimed in claim 3, wherein the diameters and the heights of the circular rings and projections (3, 8, 14) are matched to one another such that the reel wound with magnetic tape is mounted freely rotatably in the interior space of the container.

## Revendications

1. Récipient d'une seule pièce en plastique fabriqué par moulage par injection, destiné à recevoir une bande magnétique enroulée sur un noyau pourvu d'un trou intérieur, constitué d'une cuvette fond (1) et d'une cuvette couvercle (2) réunies par une languette charnière (13) par l'intermédiaire de deux lignes de pliage, pourvu d'une poignée (12) faite sur un bord oblique opposé à la ligne charnière et recouvrant celui-ci, et pourvu d'un mécanisme de fermeture pour le verrouillage de la cuvette fond à la cuvette couvercle, caractérisé par le fait que
- la cuvette fond (1) possède au centre sur sa face intérieure un appendice cylindrique (3) destiné à recevoir la bobine, la surface latérale (4) de cet appendice (3) présente, réparties sur son pourtour, des encoches s'étendant dans la direction axiale (5) et la surface circulaire de couverture (6) de l'appendice (3) est concave,
- la cuvette couvercle (2) présente au centre sur sa face intérieure un appendice en forme de couronne circulaire (8) dont le diamètre intérieur est supérieur au diamètre extérieur de l'appendice (3) de la cuvette fond,
- sur au moins un côté extérieur de la cuvette fond ou de la cuvette couvercle est prévue une patte (9) s'étendant dans la direction axiale du support de bobine et recourbée à son extrémité, qui est destinée à s'engager dans une rainure de forme correspondante (9') faite sur la partie complémentaire du récipient,
- une autre patte de forme correspondante (10) destinée à s'engager dans une rainure correspondante de la partie complémentaire du récipient est injectée sur le bord oblique (11) à l'intérieur de la poignée (12),
- sur les bords obliques (11, 11') de la partie fond et de la partie couvercle sont faites des parties de poignée complémentaires (12, 12') qui s'emboîtent lors de la fermeture du récipient, et
- au moins une paroi latérale (15) de la partie fond ou la partie couvercle a une plus grande hauteur que l'autre paroi latérale correspondante (16) de la partie complémentaire du récipient et, lors de la fermeture du récipient, la partie surélevée s'enfonce dans une rainure correspondante (16') de la partie complémentaire du récipient.

2. Récipient selon la revendication 1, caractérisé par le fait qu'autour de la saillie cylindrique (3) est faite sur la face intérieure de la cuvette fond (1) une saillie annulaire (14) de faible hauteur.

3. Récipient selon la revendication 2, caractérisé par le fait que la saillie annulaire (8) faite sur la face intérieure de la cuvette couvercle a une hauteur inférieure à celle de la saillie cylindrique (3) de la cuvette fond et approximativement égale à celle de la saillie annulaire (14) de la cuvette fond.

4. Récipient selon la revendication 1, caractérisé par le fait que la saillie cylindrique (3) est chanfreinée en tronc de cône sur son côté supérieur (7).

5. Récipient selon la revendication 3, caractérisé par le fait que les diamètres et les hauteurs des couronnes circulaires et des saillies (3, 8, 14) sont accordés entre eux de façon que la bobine garnie de bande magnétique soit montée avec liberté de rotation à l'intérieur du récipient.
